# EUROPEAN PATENT APPLICATION

(11) **EP 0 700 847 A1**
(43) Date of publication of application: **13.03.1996**
(21) Application number: 95105118.4
(22) Date of filing: 05.04.1995
(51) Int. Cl.: B65G 47/244

(54) **Item orienting method and device**

(30) Priority: 07.09.1994 JP 213389/94; 02.03.1995 JP 42731/95
(71) Applicant: Seiko Co., Ltd., Shimizu 424 (JP)
(72) Inventor: Kusatani, Masayuki, Iharagun Shizuoka, 421-32 (JP); Kojima, Eiji, Shimizu, 424 (JP)
(74) Representative: Marx, Lothar, Dr.

(57) **Abstract**

[SUMMARY]
[PURPOSE] To provide an item orienting method and device in which orienting performance is improved as much as possible, and the occurrence of failures and troubles is minimized.
[CONSTRUCTION] To transfer items b virtually horizontally on a transfer means 1 into a swinging means 2 and reverse an item being transferred by about 180 degrees by the swinging means 2 operated based on a detection signal generated by a detecting means 4 when it has detected that item b is not oriented toward the set direction.

## Description

### BACKGROUND OF THE INVENTION

### Field of the Invention

The present invention relates to an item orienting method and device making possible continuous and automatic orientation toward one direction of the front (or rear) ends of items (the leading end of the container in the figures in the direction of transfer being called front end), each having differently shaped front and rear ends, in continuously transferring a large quantity of items.

### Description of the Related Art

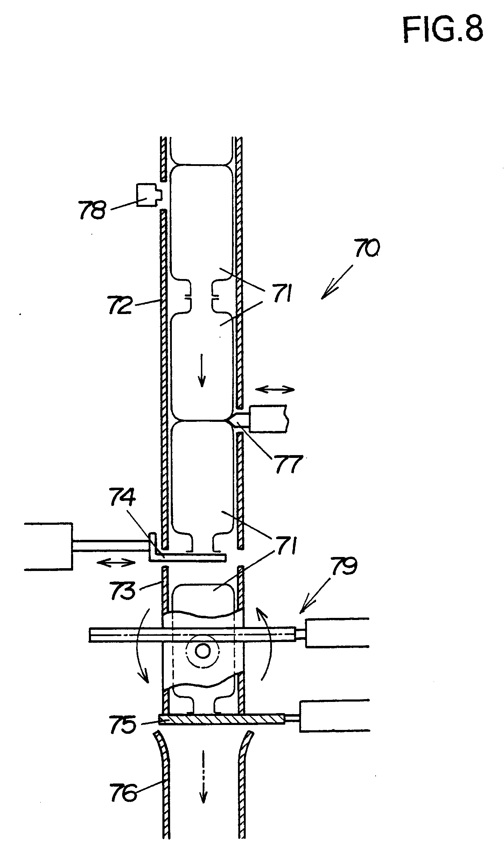

Hitherto, in orienting items having differently shaped front and back portions such as, for example, containers having their top portions formed into a mouth, such that their mouths face one direction, a well-known container orienting device 70, such as that shown in Fig. 8, has been used in which containers 71 are transferred by being allowed to fall each due to its own weight.

In such a device, containers 71 are supplied and accommodated vertically in a row in a chute 72 independently of the orientation of their top and bottom portions in a random fashion, and are one at a time transferred successively into a rotating tube 73 located below the aforementioned chute.

When a container 71 is transferred into the rotating tube, each container 71 in the chute 72 to be oriented next is stopped by a stopper 74, capable of moving forward and backward and located at the bottom portion of the chute, so that it will not be inserted into the rotating tube. On the other hand, the bottom of the rotating tube 73 is covered by a shutter 75 provided at its bottom, such that when a container is transferred into this rotating tube 73, the container 71 will not instantly dropping into lower chute 76.

A gate pin 77, capable of moving forward and backward, is provided to allow containers 71 to drop one at a time from its bottom portion, so as to prevent the containers 71 to be subsequently oriented from continuously dropping into the rotating tube when the stopper 74 in the chute 72 is released (or moves backward).

When sensor 78 detects a detection signal which signifies that a container 71 is not facing the desired direction, the rotating tube 73 reverses the container 180 degrees and orients it in the desired direction by means of a reversing member 79 connected to the rotating tube 73.

However, in this device 70, during transfer of the containers into the lower chute 76, the continuously supplied containers 71 are temporarily stopped by stopper 74, shutter 75, and gate pin 77 to orient the containers to the desired direction. This means that the container orientation can only be carried out intermittently, thereby considerably reducing orientation capability. In addition, a predetermined time is required to restart the container orientation which has been temporarily stopped, so that even if high-speed processing can be realized in other machines employed in the previous and following processes, containers cannot be smoothly send into and out from the device 70, thereby preventing high-speed operation in the entire operation line from being achieved.

In particular, in devices which orient items by temporarily stopping the containers by each type of stopper members such that they face the desired direction, the overall construction becomes complex and failures and troubles occur frequently, and maintenance becomes difficult to perform. In addition, a larger number of replacement parts are required to perform orientation of a different container type or the like, which results in longer container orientation hours and increased costs of the entire device.

### SUMMARY OF THE INVENTION

In view of the above-described problems, the present invention is aimed at providing an item orienting method and device in which items are transferred virtually horizontally on a transfer means into a swinging means, by which any item being transferred is reversed in orientation whenever a detection means detects that the item is not oriented in the set direction and generates a detection signal to the swinging means, thereby increasing the processing capability as much as possible and eliminating failures and troubles.

The above-described objects are achieved by an item orienting method of the invention in which items having differently shaped front and back portions are oriented such that their front (or rear) ends face one direction, characterized in that the items are randomly placed, independent of the orientation of their front (or rear) ends, virtually horizontally on a transfer means and transferred continuously in one direction into a swinging means successively one at a time, the swinging means provided where items are transferred on the transfer means and having a width large enough to allow the passage of one item, after which any item is reversed in orientation by about 180 degrees by the swinging means on the transfer means without being stopped in the swinging means whenever a detecting means disposed along the transfer means detects that the front (or rear) end of an item is not oriented in the desired one direction and generates a detection signal to the swinging means, so as to orient the front (or rear) ends of the items in one direction.

In this method, a transfer restricting means stops another item from being transferred into the swinging means while the swinging means is reversing the orientation of an item.

The item orienting device is so constructed as comprising a transfer means having placed thereon items having differently shaped front and back portions to transfer them continuously virtually horizontally in one direction, a gate-shaped swinging means which is placed above the path where items are being transferred on the transfer means and has a width larger than the items, an operating means linked to the swinging means for reversing the swinging means by about 180 degrees, a detecting means located near the position where an item passes on the transfer means for detecting the orientation of the item, and an item reversal section provided in the swinging means, characterized in that the device further comprises arc-shaped guides disposed so that they virtually coincide with the path taken by the front end of an item being reversed.

In this device, a transfer restricting means is provided to prevent an item to be subsequently oriented from interfering with the operation of the aforementioned swinging means during operation of the swinging means provided in the transfer path of the transfer means.

In addition, in this device, the detecting means may comprise a first detecting means provided near the position where an item passes on the transfer means to detect the orientation of the front (or rear) end of the item, and a second detecting means provided near the position where an item passes on the transfer means for detecting the timing of reversal of the item.

Further, in this device, the transfer means may have a transfer path comprising a first transfer means disposed at a side items are transferred into the swinging means, and a second transfer means extending from the place just before an item is transferred into the swinging means toward the downstream side of the swinging means, and that the speeds of the first and second transfer means are set such that the second transfer means moves faster than the first.

A description will be given below of the operation of the item orienting method and device of the invention having the above-described construction.

The method and device of the present invention makes possible orientation of the front (or rear) end of an item having a differently shaped front and rear ends so that it faces one direction.

The aforementioned items are placed independent of the orientation of the front and rear ends of the items on the transfer means virtually horizontally and transferred continuously in one direction.

In transferring items by the transfer means, the swinging means has width large enough to allow one item being transferred to pass therethrough, so that when the detecting means, provided along the transfer path, detects that the front (or rear) end of the item which has reached the swinging means is oriented in the one direction, that is in the proper direction, the swinging means does not operate, and the item passes through the swinging means without its orientation being reversed.

In contrast, when the detecting means detects that the front (or rear) end of an item is not oriented in the desired direction, the detecting means generates a signal to cause the swinging means to be operated by operating means. As the item is turned on the transfer means 180 degrees by the swinging means, the outer end of the item still being transferred rotatably moves along the arc-shaped guides. This orients the front (or rear) end thereof in the desired direction, and this item is transferred on the transfer means to the downstream side thereof.

A transfer restricting means provided in the aforementioned swinging means prevents an item to be subsequently oriented from interfering with the operation of the swinging means while it is orienting the front (or rear) end of an item to the desired direction.

The transfer means may be divided such that one portion is disposed at a side an item is transferred into the swinging means, and another portion extends from a position an item is transferred into the swinging means to the downstream side of the swinging means. Allowing these transfer means portions to move at different speeds makes possible items, transferred in continuous contact with one another, to be separated and transferred into the swinging means, so as to prevent an item from interfering with the operation of swinging means while it is orienting the item toward the desired direction.

The aforementioned detecting means may comprise a first detecting means for detecting the orientation of the front (or rear) end of an item, and a second detecting means for detecting the timing for reversing the orientation of the item. This allows reliable operation of the orienting means.

### BRIEF DESCRIPTION OF THE DRAWINGS

Fig. 1 is a partially broken front view schematically illustrating an embodiment of an item orienting device used in an item orienting method in accordance with the present invention;
Fig. 2 is a plan view showing a critical portion of Fig. 1;
Fig. 3 is a vertical cross sectional view of a critical portion of Fig. 1;
Fig. 4 is a plan view of a critical portion of an example of a transfer restricting means fixed to the item orienting device in Fig. 1;
Fig. 5 is a plan view of a critical portion of a modification of a transfer restricting means fixed to the item orienting device in Fig. 4;
Fig. 6 is a front view of an example of a divided transfer means in Fig. 1;
Fig. 7 is a plan view showing a critical portion of another modification of a transfer restricting means mounted to the item orienting device in Fig. 1; and
Fig. 8 is a vertical cross sectional view showing a critical portion of a conventional container orienting device.

### DESCRIPTION OF THE PREFERRED EMBODIMENT

A description will be given of an embodiment of the item orienting method and device of the present invention with reference to the drawings.

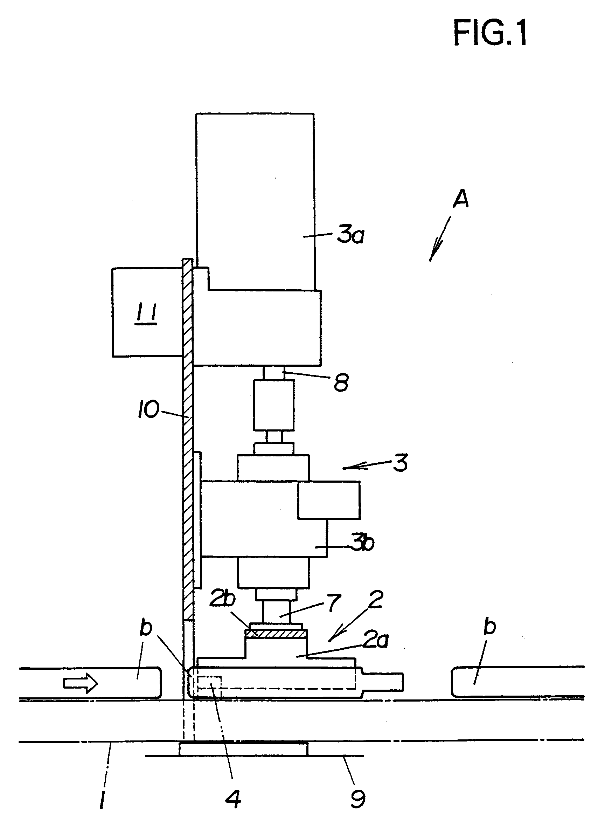

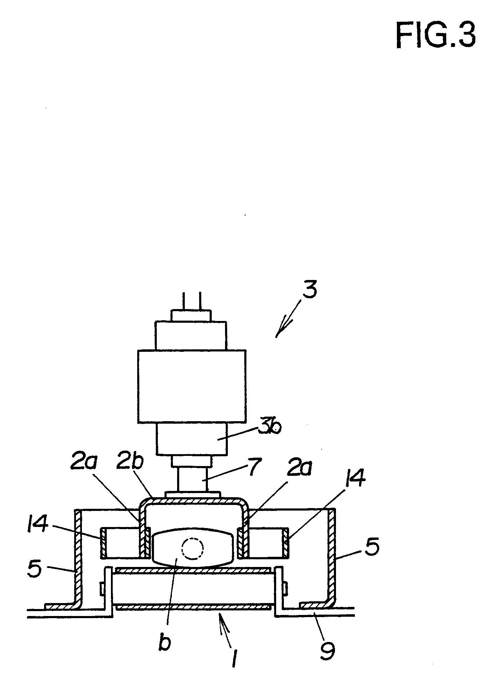

Referring to Figs. 1 to 7, in an item orienting device represented by letter A, items b having differently-shaped front and rear ends supplied in a random fashion, such as those shown in each of the figures usually placed in an upright position for holding detergents, flavorings, or other contents, are oriented such that their front (or rear) ends are oriented in one direction, for example the items are oriented such that each of their sides having a mouth to be covered with a cap or the like is oriented in one direction. The basic construction of the device includes a transfer means 1, swinging means 2, operating means 3, detecting means 4, and arc-shaped guides 5.

The aforementioned transfer means 1 is one which has placed thereon in a row a large number of items b (aforementioned containers) each on its side, more specifically each with its mouth facing sideways to transfer these items horizontally in one direction. In the embodiment, a belt conveyor or the like is used for the transfer means 1. Transfer means 1 and guides 1a (disposed parallel to each other) are formed extending on both sides of the width of an item b, so as to allow transfer of the items positioned in the central portion of the transfer means.

The aforementioned swinging means 2 is formed in the transfer means 1 through which item b being transferred passes. It is formed at the above the transfer means into the shape of a gate comprising vertical members 2a and a mounting member 2b such that members 2a form a width and mounting member has a width larger that of item b, preferably a width large enough to allow smooth passage of item b). When the swinging means is swinging, vertical members 2a engage with both sides of container b in the dimension of the width.

By means of operating means 3, the swinging means 2 turns about 180 degrees (preferably 180 degrees, but not limited thereto).

The operating means 3 comprises a semi-rotating clutch which stops when the swinging means rotates about 180 degrees, and a drive member 3 which rotates continuously. One end of a rotating shaft 7 of clutch body 3a is fixed to the upper part of the swinging means 2, while the other end is linked to an output shaft 8 of a driving member 3b. The clutch body 3a and driving member 3b are respectively fixed to a support 10 set upright by a frame 9.

A numerically controllable servomotor, rotary actuator, etc., or any other mechanical or electrical means capable of rotating an item by about 180 degrees (forward and reverse rotation may be repeated) may be selected as operating means 3.

The aforementioned detecting means 4, which is provided near the position where an item passes on the detecting means 1 to detect the item b, may be a photocell, limit switch, or other commonly used sensor. In Fig. 1, the detecting means is provided at the lower side of the swinging means 2 to allow it to detect the front (or rear) end of item b and timing for reversing the orientation of the item by the swinging means 2. It sends a detection signal to a control means 11 comprising an input section, storage section, control section, display section, etc. to appropriately cause the operating means 3 to control the operating means 3 connected to the swinging means 2.

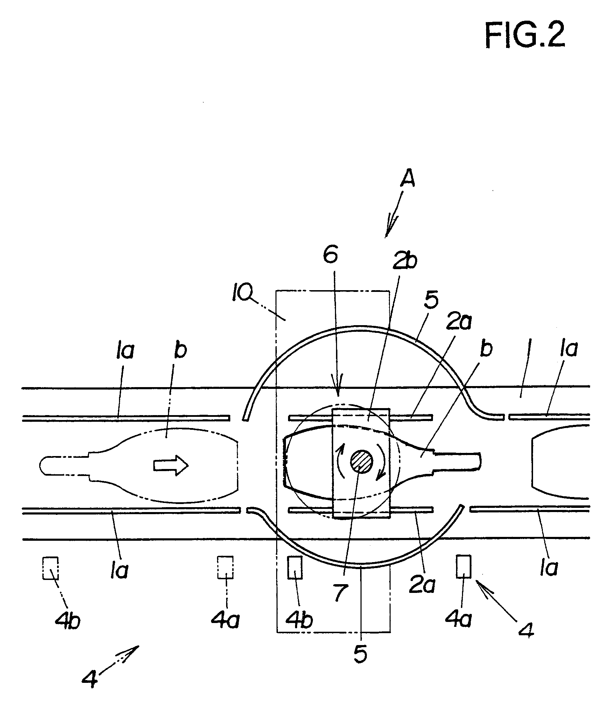

Using solid lines and dashed and dotted lines as in Fig. 2 to illustrate the items, the detecting means 4 is formed as two sets of detecting means, namely, first detecting means 4a for detecting the front (or rear) end of item b and a second detecting means 4b for detecting the timing of reversing the orientation of item b. The first detecting means are disposed below the swinging means 2 (toward the bottom of Fig. 2) respectively at the front and rear side of the item b. In this type of detecting means, the first detecting means 4a detects item b which has been transferred into and positioned in reversing section 6, so that it excels in responsiveness compared to the aforementioned type of detecting means.

In the detecting means illustrated in Fig. 2, detection by the second detecting means 4b takes place at the upstream side of the swinging means 2, which means that this detection and the reversing of the orientation of the item by the swinging means 2 are not performed at the same place. Therefore, it is necessary to use a delay means such as a timer (not illustrated) for setting the distance and time required for the detected item b to reach the swinging means 2, so that the item may be reversed in orientation at the wrong time, or the like.

The aforementioned arc-shaped guides 5, which are provided at the reversing section 6 of item 6 in the swinging means 2, have their outer sides formed into the shape of an arc in accordance with virtually the path required to reverse the front end of item b. The starting end and trailing end are virtually aligned with guides 1a, and it is preferable that the arc shape is formed such that it allows the orientation of item b to be readily reversed.

Accordingly, in the aforementioned embodiment of the present invention, in orienting items b having differently shaped front and rear ends so that, for example the mouths of containers b, are oriented in the desired direction, containers b are randomly supplied independent of the orientation of their mouths onto the transfer means 1 and, then, while each of their positioning is being corrected along guides 1a, they are continuously transferred successively in a row in one direction.

As the items b are transferred on the transfer means 1, they reach the lower side of the swinging means 2. The vertical members 2a of the swinging means 2 forms a width large enough to allow one container b to pass through, thereby preventing interference by another container, and not too large to form an excessive gap. Accordingly, in Fig. 2, when the first detecting means 4a formed by solid lines detects that the mouth of a container 6 formed by solid lines are facing one direction, that is the proper direction, the clutch body 3a of the operating means 3 of the swinging means 2 is not operated at all, so that container b passes through vertical members 2a in the swinging means 2 without its orientation being reversed, followed by transfer of the item to the next process.

However, when containers b formed by dashed-and-dotted lines in Fig. 2 is transferred, the first detecting means 4a detects that the item b is not oriented in the desired direction, more specifically that the mouth is not facing the direction toward which the item is transferred, and this detection signal is sent to the control means 11.

When the second detecting means 4b detects container b, a signal indicating the timing of reversal is generated to cause operation of clutch body 3a of the operating means 3 so as to allow transmission of the rotation of the continuously rotating driving member 3b through clutch body 3a to swinging means 2.

As a result of this, container b positioned between the vertical members 2a of the swinging means 2 is instantaneously reversed 180 degrees without it being affected by the transferring power of the transferring means 1. This orients the mouth of container b toward the downstream side without stopping the transfer of the item, so as to allow the item to be transferred by the transfer means 1 toward the downstream side, thereby completing the orienting process.

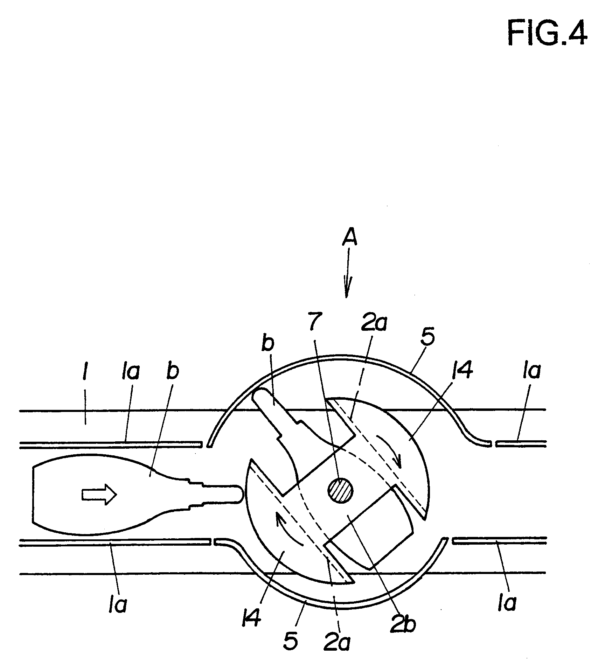

Referring to Figures 4, 5, and 7, reference numeral 14 denotes a transfer restricting means and is provided in the transfer path of the transfer means 1 for the purpose of preventing an item to be subsequently oriented from interfering with the operation of swinging means 2 during operation thereof. In the illustration in Fig. 4, an arc-shaped shielding member is integrally mounted to the outer sides of the vertical members 2a in the swinging means 2.

Even if by any chance items b being transferred are close to one another and an item is inserted into the reversing section 6 on the transfer means when an item is being reversed, the front end of item b to be subsequently oriented on the transfer means 1 will bump against the transfer restricting means 14, so that the item will not pass through the reversing section. In addition, in the transfer restricting means 14 formed into the shape of an arc, the positioning of the item b in contact therewith does not change, so that the posture of item b on the transfer means 1 does not change, thereby allowing passage of item b through swinging means 2.

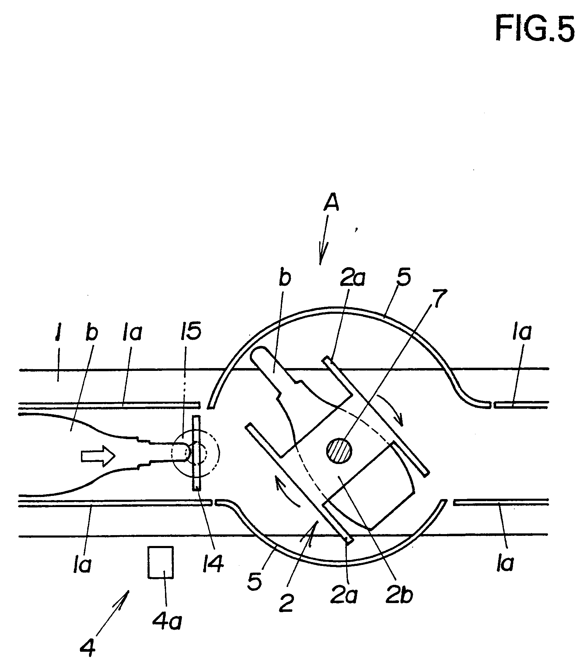

In the illustration in Fig. 5, plate-shaped shielding member is provided such that it faces the transfer means 1 in front of the swinging means 2. For example, it may be such as to be connected to a supply member 15 operated by a signal generated by the first detecting means 4a, in which items b which are continuously transferred are forcedly stopped temporarily by the transfer restricting means 14.

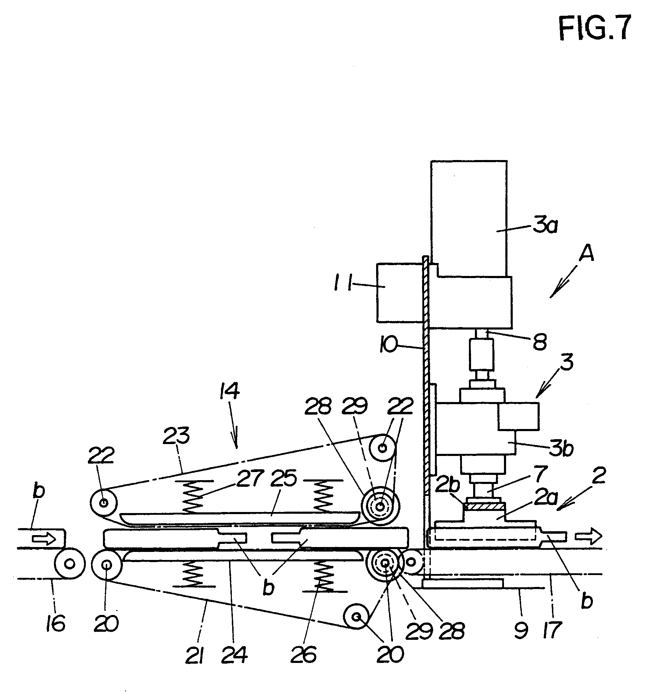

Further, in the illustration in Fig. 7, in front of swinging means 2, there is provided a restricting means between the first transfer means 16 and the second transfer means 17, comprising a lower conveyor 21 having, for example, a belt which is stretched around axles 20, in alignment with the transfer plane of the second transfer means, and an upper conveyor 23 having, for example, a belt stretched around supporting axes 22. The upper conveyor is provided opposing the lower conveyor, with space for transferring items provided therebetween. Items b are placed between the lower and upper conveyors 21 and 23 and transferred toward the second transfer means 17.

Push members 24 and 25 are disposed respectively on the back surfaces of the lower and upper conveyors 21 and 23, so that, when necessary, a single or a plurality of resilient members 26 and 27 such as springs presses item b at a predetermined pressure.

These lower and upper conveyors 21 and 23 are driven by driving members 28 such as a motor, and, as shown in Fig. 7, are respectively linked to supporting axle 20 and 22 through a approaching/separating means 29 such as a vacuum or electromagnetic clutch.

Accordingly, when item b is not supplied to swinging means 2 while the driving members 28 are continuously rotated, a signal generated from control means 11 causes approaching/separating means 29 to operate by the power supply ON/OFF operation, and stops rotation from being transferred to axles 20 and 22. This causes item b to be clamped and held between the lower and upper conveyors 21 and 23 in a stopped state at the transfer restricting means 14.

Container b is stopped while item b is being reversed in orientation by swinging means 2. More effective stopping of item b can be achieved by previously inputting into the control means 11 a constant angle of rotation of item b and time required for rotation so as to stop the transfer restricting means 14 by that angle and length of time. A signal to be generated to approaching/separating means 29 is processed by computation at the control means 11 by a signal generated from operating means 3, detecting means 4, etc.

In comparison with the restricting means of the aforementioned shielding-member type, in the conveyor type problems of piled up and displaced items b do not occur, thereby minimizing to the utmost the number of troubles that occur during re-supply of an item to swinging means 2.

In addition, with electrical control, high-speed transfer of items can be achieved. Further, since the construction is very simple, failures occur less often, even when items are stopped and moved frequently, and maintenance can be carried out easily.

Still further, since less parts need to be replaced when the item b to be transferred is changed in type, costs can be kept to a minimum, and replacement can be carried out readily.

Still even further, the transfer restricting means 14 allows continuously transferred items b to be transferred into the swinging means 2 at a constant distance from one another.

In transferring the items at a constant distance from one another, for example, the speed of the first transfer means 16 relative to the transfer restricting means can be arbitrarily changed, so that either one of means 16 or 14 can be speeded up or slowed down. (Along with this, the speed of the second transfer means 17 may also be adjusted.)

The aforementioned driving members 28 are interlocked by, for example, a motor with respect to lower and upper conveyor 21 and 23, which is a commonly used mechanism. For the approaching/separating means 29, a servomotor may be used instead for the driving members 28.

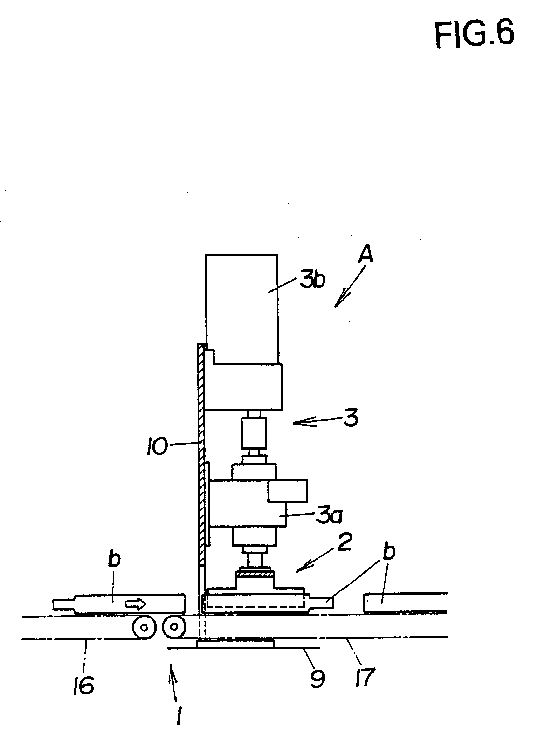

In Fig. 6, reference numeral 1 denotes a divided-type transfer means whose transfer path is divided into a first transfer means 16 located adjacent to where the items are transferred into swinging means 2, and a second transfer means 17 extending from a position just before items are transferred into the swinging means 2 toward the downstream side of the swinging means. Setting the second transfer means 17 at a higher speed than the first transfer means 16 keeps item b to be subsequently oriented inserted into the reversing section 6 from being forced into the swinging means 2, and allows passage of item b through the swinging means 2 because the item transfer posture is not changed, even when items b are continuously transferred at a small distance apart from one another.

As will be understood from the foregoing description, according to the invention, items can be reversed in orientation without stopping the items being continuously transferred on the transfer means, so that high-speed orientation of the items can be continuously performed, orientation performance can be greatly improved, and processors to be connected to the front and back of the device with higher operation speeds can be used effectively, and overall increase in speed and reduction in labor can be achieved, when they are incorporated into the series of lines.

There are less parts forming the device, which allows a more compact device to be produced more easily, failures or troubles to occur very infrequently, and maintenance to be carried out easily, so that the device can be produced at a low cost.

In particular, in changing the item type to be oriented, less parts need to be replace therefor, so that it can be easily performed more quickly.

An item transfer restricting means placed in front of the swinging means prevents troubles arising from an item interfering with another item from occurring when an item is being oriented by the swinging means.

## Claims

1. A method for orienting items in which items having differently shaped front and back portions are oriented such that their front (or rear) ends face one direction, characterized in that said items are randomly placed, independent of the orientation of their front (or rear) ends, virtually horizontally on a transfer means and transferred continuously in one direction into a swinging means successively one at a time, said swinging means provided where items are transferred on the transfer means and having a width large enough to allow the passage of one item, after which any item is reversed in orientation by about 180 degrees by said swinging means on the transfer means without being stopped in said swinging means whenever a detecting means disposed along the transfer means detects that the front (or rear) end of an item is not oriented in the desired one direction and generates a detection signal to said swinging means, so as to orient the front (or rear) ends of the items in one direction.

2. A method for orienting items in which items having differently shaped front and back portions are oriented such that their front (or rear) ends face one direction, characterized in that said items are randomly placed, independent of the orientation of their front (or rear) ends, virtually horizontally on a transfer means and transferred continuously in one direction into a swinging means successively one at a time, said swinging means provided where items are transferred on the transfer means and having a width large enough to allow the passage of one item, after which any item is reversed in orientation by about 180 degrees by said swinging means on the transfer means without being stopped in said swinging means whenever a detecting means disposed along the transfer means detects that the front (or rear) end of an item is not oriented in the desired one direction and generates a detection signal to said swinging means, so as to orient the front (or rear) ends of the items in one direction, and characterized in that a transfer restricting means is provided to stop the transfer of another item into the swinging means during reversal of orientation of an item by the swinging means.

3. An item orienting device comprising a transfer means having placed thereon items having differently shaped front and back portions to transfer them continuously virtually horizontally in one direction, a gate-shaped swinging means which is placed above the path where items are being transferred on tee transfer means and has a width larger than the items, an operating means linked to the swinging means for reversing said swinging means by about 180 degrees, a detecting means located near the position where an item passes on said transfer means for detecting the orientation of the item, and an item reversal section provided in said swinging means, characterized in that said device further comprises arc-shaped guides disposed so that they virtually coincide with the path taken by the front end of an item being reversed.

4. An item orienting device comprising a transfer means having placed thereon items having a differently shaped front and back portions to transfer them continuously virtually horizontally, a gate-shaped swinging means which is placed in a location above the path of items being transferred on the transfer means and has a width larger than the items, an operating means linked to the swinging means for allowing reversal of an item by about 180 degrees by the swinging means, a detecting means located near the position where an item passes on said transfer means for detecting the orientation of the item, and an item reversal section provided in said swinging means, and arc-shaped guides disposed so that they virtually coincide with the reversal path of the front end of an item, characterized in that said device further comprises a transfer restricting means provided in the transfer path of said transfer means to prevent items to be subsequently oriented from interfering with the operation of said swinging means during operation of said swinging means.

5. An item orienting device according to Claim 3 or 4, characterized in that said detecting means comprises a first detecting means provided near the position where an item passes on said transfer means to detect the orientation of the front (or rear) end of the item, and a second detecting means provided near the position where an item passes on said transfer means for detecting the timing of reversal of the item.

6. An item orienting device according to Claim 3, 4, or 5, characterized in that said transfer means has a transfer path comprising a first transfer means disposed at a side items are transferred into said swinging means, and a second transfer means extending from the place just before an item is transferred into the swinging means toward the downstream side of the swinging means, and that the speeds of the first and second transfer means are set such that the second transfer means moves faster than the first.
